# EUROPÄISCHE PATENTSCHRIFT

(11) **EP 0 514 573 B1**
(45) Veröffentlichungstag und Bekanntmachung des Hinweises auf die Patenterteilung: **20.07.1994**
(21) Anmeldenummer: 91108389.7
(22) Anmeldetag: 24.05.1991
(51) Int. Cl.: G01D 5/38, G02B 6/12, G02B 6/34

(54) **Vorrichtung zum Ein- und/oder Auskoppeln von Lichtstrahlen mit einem integriert-optischen Baustein**
Device for coupling and/or uncoupling of light beams with an integrated optical element
Dispositif de couplage et/ou découplage des rayons lumineux avec un élément d'optique intégré

(43) Veröffentlichungstag der Anmeldung: 25.11.1992
(73) Patentinhaber: Dr. Johannes Heidenhain GmbH, D-83292 Traunreut (DE)
(72) Erfinder: Franz, Andreas, Dr., W-8221 Kienberg (DE); Allgäuer, Michael, W-8221 Stein/Traun (DE)

(56) Entgegenhaltungen:
- EP-A- 0 276 395
- EP-A- 0 401 654
- PATENT ABSTRACTS OF JAPAN, Band 13, Nr. 180 (P-864)(3528), 27. April 1989; & JP-A-01010436
- JOURNAL OF LIGHTWAVE TECHNOLOGY, Band 7, Nr. 2, Februar 1989, Seiten 270-273, New York, US; S. URA et al.: "Integrated-Optic Interferometer Position Sensor"

## Beschreibung

Die Erfindung bezieht sich auf eine optische Vorrichtung gemäß dem Oberbegriff des Anspruches 1.

Derartige Vorrichtungen werden in zunehmendem Maße in der Längen- und Winkelmeßtechnik angewandt, um möglichst klein bauende und störungsunanfällige Positionsmeßeinrichtungen herstellen zu können.

Eine klein bauende Positionsmeßeinrichtung ist beispielsweise Gegenstand der DE 36 25 327 C1. Aus dieser Druckschrift, sowie aus dem dort genannten Stand der Technik ist es prinzipiell bekannt, mit Hilfe von Einkoppelgittern Licht in Lichtwellenleiter von integrierten optischen Schaltungen einzuspeisen.

Aus der EP-A- 0 401 654 ist eine Positionsmeßeinrichtung bekannt, bei der auf einem Substrat eines integriert-optischen Bausteines mehrere Ein- bzw. Auskoppelgitter für getrennte Teilstrahlenbündel vorgesehen sind.

Beim Stand der Technik ist ein relativ großer Abstand (mehrere mm) zwischen Maßstab und integriertoptischem Baustein bzw. zwischen den Beugungsgittern notwendig, um eine räumliche Trennung der beiden Meßstrahlenbündel an den Orten der Koppelgitter zu erreichen.

Aus dem Stand der Technik ist ferner zu entnehmen, daß Ein- oder auch Auskoppelgitter komplizierten mathematischen Zusammenhängen unterliegen und meistens elliptisch oder parabolisch verlaufen, oder noch komplizierter aufgebaut sind, wie auch aus der DE 39 28 064 A1 ersichtlich ist.

All diese Gründe haben zur Folge, daß in der Praxis bisher kaum Geräte realisiert worden sind, in denen real gefertigte Gitter zum Ein- oder Auskoppeln vorhanden sind, obwohl der Bedarf an derartig miniaturisierten Positionsmeßeinrichtungen besteht.

Der Erfindung liegt demgemäß die Aufgabe zugrunde, eine Vorrichtung der eingangs genannten Art anzugeben, bei der die Abstimmung der einzuspeisenden Strahlenbündel und der Einkoppelgitter oder der Auskoppelgitter und der auszukoppelnden Lichtstrahlen so erfolgt, daß eine miniaturisierte Bauweise möglich ist.

Diese Aufgabe wird von einer Vorrichtung mit den Merkmalen des Anspruches 1 gelöst.

Die besonderen Vorteile der Erfindung liegen darin, daß sich integriert-optische Bausteine gemäß der Erfindung sehr gut bei Positionsmeßeinrichtungen einsetzen lassen.

Vorteilhafte Ausgestaltungen der Erfindung sind den abhängigen Ansprüchen zu entnehmen.

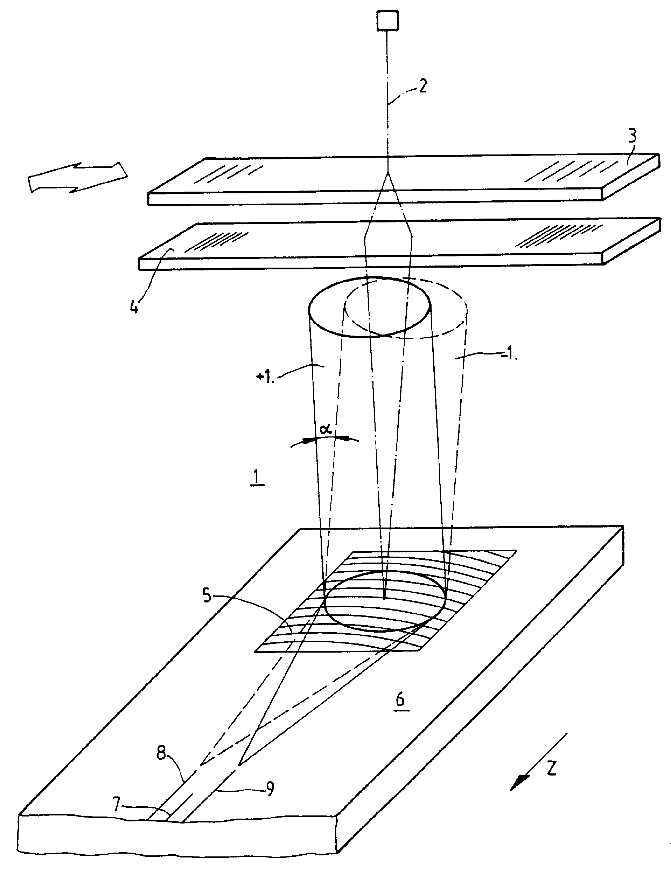

Mit Hilfe eines Ausführungsbeispieles soll die Erfindung anhand der Zeichnung näher erläutert werden.

Die Figur zeigt eine Durchlicht-Meßeinrichtung.

Bei der in der Zeichnung dargestellten Positionsmeßeinrichtung 1 fällt ein Lichtstrahl 2 auf einen Maßstab 3, der durch ein Beugungsgitter gebildet wird. An dem Maßstab 3 werden zwei Teilstrahlenbündel, z. B. der +1. und -1. Beugungsordnung erzeugt, die auf ein weiteres Beugungsgitter treffen, das als Korrekturgitter 4 bezeichnet wird.

Am Korrekturgitter 4 werden die beiden Teilstrahlenbündel +1. und -1. nochmals gebeugt und treffen an einem gemeinsamen Ort auf ein Einkoppelgitter 5, wo sie sich überlappen. Das Einkoppelgitter 5 ist Bestandteil eines integriert-optischen Bausteines 6, der weitere Elemente enthält, wie sie bei Positionsmeßeinrichtungen mit integriert-optischen Bausteinen üblich sind. Von diesen Elementen ist noch ein Koppler 7 angedeutet, in dessen Eingangszweige das fokussierende Einkoppelgitter 5 die beiden Teilstrahlenbündel +1. und -1. über Wellenleiter 8 und 9 einkoppelt.

Da die beiden Teilstrahlenbündel +1. und -1. unter einem sehr kleinen Winkel α (≈ mrad) gegeneinander geneigt in das Einkoppelgitter 5 eintreten, führt dies bei der gezeigten Verwendung eines fokussierenden Einkoppelgitters 5 zu unterschiedlichen Foki (Fokuslagen), so daß sie getrennt in je einen Wellenleiter 8 bzw. 9 eingekoppelt werden können, die in den Koppler 7 führen.

Ein solcher Koppler 7 kann ein bekannter 2x3 Koppler sein.

Da durch den kleinen resultierenden Winkel, unter dem die Teilstrahlenbündel +1. und -1. in die Wellenleiter 8 und 9 des Kopplers 7 eingekoppelt werden, diese von vornherein nicht weit auseinander liegen, ist im Koppler 7 kein weiter Weg zum Zusammenführen zu den Kopplereingängen nötig.

Diese Maßnahme führt auch zu einer verkürzten Baulänge in Z-Richtung.

Da die Orte der Einkoppelelemente nicht mehr relativ weit auseinander liegen, kann der Abstand der Beugungsgitter 3 und 4 stark verringert werden. Dadurch wird die Empfindlichkeit gegen Verkippung und Verdrehung der Bauelemente zueinander sehr reduziert, was geringere Meßfehler zur Folge hat.

Auf die vorbeschriebene Weise werden gemaß der Erfindung die optischen Wege drastisch verkürzt, so daß sich die Baugröße in allen Koordinatenrichtungen verringert.

Außerdem ist nur noch ein Einkoppelgitter 5 erforderlich.

Wesentliches Merkmal der Erfindung ist es, daß die beiden Teilstrahlenbündel +1. und -1. nicht parallel auf dem Substrat des integriert-optischen Bausteines 6 auftreffen, sondern um einen kleinen Winkel α (mrad) gegeneinander geneigt sind. Dies kann auf verschiedenste Weise, z. B. durch Drehung des Korrekturgitters 4 gegenüber dem Maßstab 3, oder durch Kippung zueinander oder durch geringfügig abweichende Gitterkonstanten erzielt werden. Kombinationen dieser Maßnahmen sind möglich.

Die Erfindung ist nicht auf das Ausführungsbeispiel bei Positionsmeßeinrichtungen beschränkt. Durch den unabhängigen Anspruch wird ausgedrückt, daß optische Vorrichtungen jeglicher Art, bei denen zwei Strahlenbündel, die geringfügig zueinander geneigt sind und auf ein einziges Ein- und/oder Auskoppelgitter fallen, um unterschiedliche Wellenleiter zu speisen, die Erfindung darstellen.

## Patentansprüche

1. Optische Vorrichtung, mit einer Beleuchtungsquelle, in deren Strahlengang (2) wenigstens ein erstes Beugungselement (3) zum Erzeugen von mehreren gebeugten Strahlenbündeln (+1., -1.) liegt, sowie mit wenigstens einem integrierten Ein- und/oder Auskoppelelement (5) zum Ein- und/oder Auskoppeln der gebeugten Strahlenbündel (+1., -1.)in einen und/oder aus einem Lichtwellenleiter (8, 9), wobei das Ein- und/oder Auskoppelelement von einem Gitter (5) gebildet wird, und mit wenigstens einem weiteren Beugungselement (4), dadurch gekennzeichnet, daß die Beugungselemente (3, 4) durch unterschiedliche Gitterkonstanten und/oder Verdrehung und/oder Verkippung zueinander die gebeugten Strahlenbündel (+1., -1.) unparallel in den integriert optischen Baustein (6) in ein einzelnes Gitter (5) auf dem Substrat des integriert optischen Bausteines (6)an einem weitgehend gemeinsamen Ort eintreten lassen und von diesem einzelnen Gitter (5) in je einen Wellenleiter (8, 9) ein-, oder aus je einem Wellenleiter (8, 9) ausgeleitet werden.

2. Optische Vorrichtung nach Anspruch 1, dadurch gekennzeichnet, daß das Gitter (5) ein fokussierendes Gitter ist.

3. Optische Vorrichtung nach Anspruch 1, dadurch gekennzeichnet, daß die Beugungselemente Beugungsgitter (3, 4) sind.

4. Optische Vorrichtung nach Anspruch 3, dadurch gekennzeichnet, daß die Beugungsgitter (4, 5) Lineargitter sind.

5. Optische Vorrichtung nach Anspruch 3, dadurch gekennzeichnet, daß die Beugungsgitter Radialgitter sind.

## Claims

1. Optical device, with a lighting source in the beam path (2) of which is located at least one first diffraction element (3) for producing several diffracted beams (+1., -1.), as well as with at least one integrated input and/or output coupling element (5) for the input and/or output coupling of the diffracted beams (+1., -1.) into and/or out of a light waveguide (8, 9), wherein the input and/or output coupling element is formed by a grid (5), and with at least one additional diffraction element (4), characterised in that the diffraction elements (3, 4) due to different grid constants and/or rotation and/or tilting relative to each other cause the diffracted beams (+1., -1.) to enter in non-parallel relationship the integrated optical component (6) in a single grid (5) on the substrate of the integrated optical component (6) at a largely common point and are guided by this single grid (6) each into a waveguide (8, 9) or each out of a waveguide (8, 9).

2. Optical device according to claim 1, characterised in that the grid (5) is a focusing grid.

3. Optical device according to claim 1, characterised in that the diffraction elements are diffraction grids (3, 4).

4. Optical device according to claim 3, characterised in that the diffraction grids (4, 5) are linear grids.

5. Optical device according to claim 3, characterised in that the diffraction grids are radial grids.

## Revendications

1. Dispositif optique comportant une source d'éclairage avec, placé sur le trajet (2) des rayons en provenance de celle-ci, au moins un premier élément de diffraction (3) pour produire plusieurs faisceaux de rayons (+1., -1.) diffractés, ainsi qu'au moins un élément de couplage et/ou de découplage (5) intégré pour introduire et/ou extraire les faisceaux de rayons (+1., -1.) diffractés dans un et/ou hors d'un guide de lumière (8, 9), l'élément de couplage et/ou de découplage étant constitué par un réseau (5) et comportant au moins un élément de diffraction (4) supplémentaire, caractérisé par le fait que, par des constantes de réseau différentes et/ou par rotation et/ou par basculement les uns par rapport aux autres, les éléments de diffraction (3, 4) introduisent les faisceaux de rayons (+1., -1.) diffractés de manière non parallèle dans l'organe optique (6) intégré, dans un réseau (5) unique formé sur le substrat dudit organe (6) optique intégré, en un point sensiblement commun et que, à partir de ce réseau (5) unique, le faisceau de rayons diffractés est introduit chaque fois dans un guide de lumière (8, 9) ou est extrait d'un guide lumière (8, 9).

2. Dispositif optique selon la revendication 1, caractérisé par le fait que le réseau (5) est un réseau focalisant.

3. Dispositif optique selon la revendication 1, caractérisé par le fait que les éléments de diffraction sont des réseaux de diffraction (3, 4).

4. Dispositif optique selon la revendication 3, caractérisé par le fait que les réseaux de diffraction (3, 4) sont des réseaux linéaires.

5. Dispositif optique selon la revendication 3, caractérisé par le fait que les réseaux de diffraction sont des réseaux radiaux.
